# EUROPÄISCHE PATENTANMELDUNG

(11) **EP 4 604 389 A1**
(43) Veröffentlichungstag der Anmeldung: **20.08.2025**
(21) Anmeldenummer: 24157533.1
(22) Anmeldetag: 14.02.2024
(51) Int. Cl.: H02S 20/24, H02S 40/12

(54) **DACHSYSTEM, VERWENDUNG EINES DACHSYSTEMS UND PHOTOVOLTAIKSYSTEM**

(71) Anmelder: ABS Safety GmbH, 47623 Kevelaer (DE)
(72) Erfinder: RANKERS, Simon, 41334 Nettetal (DE); JOEREßEN, Philipp, 47574 Goch (DE)
(74) Vertreter: Seemann & Partner Patentanwälte mbB

(57) **Zusammenfassung**

Die Erfindung betrifft u.a. ein Dachsystem (20) für mindestens ein Photovoltaikmodul (90), wobei das Dachsystem (20) auf einer Dachfläche (92), insbesondere auf einem Flachdach (94), anordenbar oder angeordnet ist, wobei das Dachsystem (20) mehrere Modulstützen (30) zum Stützen mindestens eines Photovoltaikmoduls (90) aufweist, wobei die Modulstützen (30) jeweils mit einer Unterseite (32) auf der Dachfläche (92) anordenbar oder angeordnet sind und die Modulstützen (30) jeweils an einer Oberseite (34) eine Auflagefläche (35) zum Auflegen eines Photovoltaikmoduls (90) aufweisen, wobei das Dachsystem dadurch weitergebildet ist, dass das Dachsystem (20) z.B. eine, insbesondere elektrisch betriebene, Heizvorrichtung (50) zum Beheizen des Dachsystems (20) aufweist.

## Beschreibung

Die Erfindung betrifft ein Dachsystem für mindestens ein Photovoltaikmodul, eine Verwendung eines Dachsystems und ein Photovoltaiksystem.

Es ist bekannt, dass auf Flachdächern von Gebäuden technische Anlagen wie beispielsweise Klima- und Lüftungsanlagen, Photovoltaikanlagen und thermische Solaranlagen oder Blitzschutz- und Antennensysteme angeordnet sind.

Solche technischen Anlagen werden z.B. auf gewerblich genutzten Immobilien betrieben, beispielsweise, aber nicht ausschließlich, auf Bürogebäuden, Hotels, Ladengeschäften, Lagerhallen, Produktionsstätten, Sporthallen oder Veranstaltungshallen.

Beispielsweise sind zum Aufstellen von Photovoltaikmodulen Halterungen vorgesehen, welche die Photovoltaikmodule in einem vorbestimmten Neigungswinkel halten. Je nach Aufstellort sind durch den unterschiedlichen Sonnenstand unterschiedliche Neigungswinkel für eine optimale Energieausbeute optimal.

Darüber hinaus hängt die von Photovoltaikmodulen bereitgestellte Leistung davon ab, ob die Sonneneinstrahlung die Photovoltaikmodule erreicht. Sowohl Bewölkung oder Nebel in der Luft als auch Niederschlag wie Regen oder Schnee auf einem Photovoltaikmodul schränkt die bereitgestellte Energie ein.

Für die Installation und Wartung von technischen Anlagen, insbesondere Photovoltaikanlagen, auf einer Dachfläche ist es notwendig, dass Fachpersonal die Dachfläche betritt. Dafür sind Wartungswege abzusichern, zum Beispiel mittels Absturzsicherungen. Diese sichern als Kollektivschutzsystem alle Personen im absturzgefährdeten Bereich, zum Beispiel als Geländer, oder als Individualschutzsystem eine einzelne Person ab.

Üblicherweise werden die unterschiedlichen auf einer Dachfläche angeordneten Komponenten, wie beispielsweise technische Anlagen oder Absturzsicherungen, einzeln an der Dachfläche befestigt. Dazu sind auf Flachdächern Befestigungen mittels Dachdurchdringung vorgesehen, wobei zur Verankerung in die Oberflächenbeläge und die Dachkonstruktion gebohrt wird. Typischerweise ist die mögliche Traglast eines Daches begrenzt.

Ausgehend von diesem Stand der Technik besteht eine Aufgabe der vorliegenden Erfindung darin, eine sichere und energieeffiziente Anordnung und einen sicheren und energieeffizienten Betrieb von mindestens einem Photovoltaikmodul auf einer Dachfläche, insbesondere einem Flachdach, dauerhaft zu gewährleisten.

Die Aufgabe wird gelöst durch ein Dachsystem für mindestens ein Photovoltaikmodul, wobei das Dachsystem auf einer Dachfläche, insbesondere auf einem Flachdach, anordenbar oder angeordnet ist, wobei das Dachsystem mehrere Modulstützen zum Stützen mindestens eines Photovoltaikmoduls aufweist, wobei die Modulstützen jeweils mit einer Unterseite auf der Dachfläche anordenbar oder angeordnet sind und die Modulstützen jeweils an einer Oberseite eine Auflagefläche zum Auflegen eines Photovoltaikmoduls aufweisen, wobei das Dachsystem derart weitergebildet ist, dass das Dachsystem eine, insbesondere elektrisch betriebene, Heizvorrichtung zum Beheizen des Dachsystems aufweist, wobei insbesondere die Heizvorrichtung zum Beheizen mindestens einer Modulstütze und/oder mindestens eines Photovoltaikmoduls vorgesehen ist und/oder mit mindestens einer Modulstütze thermisch gekoppelt ist, und/oder dass die Modulstützen in einer Höhe zwischen der jeweiligen Unterseite und jeweiligen Oberseite zum Einstellen eines Neigungswinkels eines Photovoltaikmoduls einstellbar sind und/oder dass das Dachsystem mindestens einen als Kraftsensor ausgebildeten Lastkontrollsensor zum Bereitstellen von Lastdaten aufweist, wobei der mindestens eine Lastkontrollsensor ausgebildet und eingerichtet ist, eine auf das Dachsystem und/oder mindestens ein Photovoltaikmodul wirkende Gewichtskraft als Lastdaten zu messen, wobei insbesondere der mindestens eine Lastkontrollsensor an einer der Dachfläche zugewandten Unterseite des Dachsystems angeordnet ist.

Der Grundgedanke der Erfindung besteht darin, Photovoltaikmodule einer Photovoltaikanlage sicher auf einer Dachfläche mittels eines Dachsystems anzuordnen und dabei das Dachsystem derart weiterzuentwickeln, dass die Photovoltaikanlage angepasst an Standort, Jahreszeit und Wetterbedingungen einen hohen Energieertrag bereitstellt. Hierzu ist vorgesehen, dass der Neigungswinkel des mindestens einen Photovoltaikmoduls mittels in einer Höhe einstellbarer Modulstützen variabel einstellbar ist. Weiterhin ist mittels mindestens eines Lastkontrollsensors eine auf die Dachfläche lastende Gewichtskraft, bewirkt durch das Dachsystem und/oder mindestens ein Photovoltaikmodul, einschließlich Niederschläge, messbar. Hierdurch ist ein Betriebszustand der Photovoltaikmodule charakterisierbar, insbesondere ist eine auf den Photovoltaikmodulen befindliche Schneelast detektierbar. Um die Energieerzeugung wiederherzustellen oder sicherzustellen und die Last auf die Dachfläche zu verringern, weist das Dachsystem insbesondere eine elektrisch betriebene Heizvorrichtung zum Beheizen des Dachsystems und/oder mindestens eines Photovoltaikmoduls auf. Auf diese Weise schmilzt aufliegender Schnee und ein sicherer, energieerzeugender Betrieb der Photovoltaikanlage ist gewährleistet.

Bevorzugterweise wirken eine Heizvorrichtung, in der Höhe einstellbare Modulstützen und mindestens ein Lastkontrollsensor zusammen. Beispielsweise ist vorgesehen, dass bei Überschreiten einer vorbestimmten Traglast, festgestellt mittels des Lastkontrollsensors, die Heizvorrichtung eingeschaltet oder auf eine höhere Leistung eingestellt wird. In einer anderen Ausführungsform wird bei Überschreiten einer vorbestimmten Traglast die Höhe der Modulstützen, d.h. der Neigungswinkel der Photovoltaikmodule, verstellt, sodass weniger Niederschlag auf den Photovoltaikmodulen verbleibt.

Ein weiterer Vorteil der Erfindung ist, dass die Nutzung eines erfindungsgemäßen Dachsystems eine effiziente Nutzung mit großer Energieausbeute mittels der eingesetzten Photovoltaikmodule ermöglicht ist. Kritische Traglasten auf einer Dachfläche können rechtzeitig detektiert und verringert werden.

Ein Photovoltaikmodul ist eine Komponente einer Photovoltaikanlage, wobei üblicherweise ein Photovoltaikmodul aus mehreren flächig angeordneten Solarzellen besteht. Das Dachsystem weist mehrere Modulstützen zum Stützen mindestens eines Photovoltaikmoduls auf, wobei die Modulstützen jeweils eine Unterseite und eine Oberseite aufweisen. Dabei ist die Unterseite der Modulstütze insbesondere der untere, der Dachfläche zugewandte Abschnitt der Modulstütze. Die Oberseite der Modulstütze ist insbesondere der obere, der Dachfläche abgewandte Abschnitt der Modulstütze. Die Modulstützen weisen jeweils an einer Oberseite eine Auflagefläche zum Auflegen eines Photovoltaikmoduls auf. Auf eine Auflagefläche sind ebenfalls mehrere Photovoltaikmodule auflegbar. Ebenso ist es erfindungsgemäß, ein Photovoltaikmodul auf mehrere Auflageflächen aufzulegen. In bevorzugten Ausführungsformen weist die Oberseite einer Modulstütze, zusätzlich zu einer Auflagefläche, weitere Merkmale auf, welche weiter von der Dachfläche entfernt sind, beispielsweise eine Modulbefestigungsvorrichtung. In weiteren Ausführungsformen weisen die Auflageflächen zusätzliche Merkmale, insbesondere eine Auflageflächenbohrung, auf.

Insbesondere weist die elektrisch betriebene Heizvorrichtung einen Heizwiderstand auf. Ein Heizwiderstand hat den Zweck, elektrische Energie in thermische Energie, also Wärme, umzuwandeln. Bevorzugterweise ist die Heizvorrichtung ausgebildet und eingerichtet, mindestens eine Modulstütze und/oder mindestens ein, insbesondere auf eine Modulstütze aufgelegtes, Photovoltaikmodul zu beheizen. Vorteilhafterweise ist die Heizvorrichtung mit einer Modulstütze und/oder mit mindestens einem Photovoltaikmodul thermisch gekoppelt. Besonders gute thermische Leitfähigkeit wird erreicht, wenn die Modulstützen aus Metall, insbesondere Aluminium, hergestellt sind. In Ausführungsformen weist das Dachsystem, insbesondere an einer Unterseite des Dachsystems, eine thermische Isolierung auf. Diese hat die technische Wirkung, dass ein Beheizen des Dachsystems das Dachsystem und aufgelegte Photovoltaikmodule erwärmt und wenig Verluste in die Umgebung, insbesondere die Dachfläche, abgegeben werden.

Insbesondere sind die Modulstützen in ihrer Höhe einstellbar. Hierzu sind insbesondere die Modulstützen einstückig oder mehrstückig ausgefertigt. In einer Ausführungsform weist das Dachsystem unterschiedliche Ausführungsformen von Modulstützen auf, wobei mindestens eine Ausführungsform einer Modulstütze höhenverstellbar ausgebildet ist. Bevorzugterweise ist dies die Ausführungsform einer Modulstütze mit der größten Höhe.

Bevorzugterweise ist mindestens ein Lastkontrollsensor ausgebildet und eingerichtet, eine auf das Dachsystem und/oder mindestens ein Photovoltaikmodul wirkende Gewichtskraft als Lastdaten zu messen. Eine solche Gewichtskraft ist beispielsweise die Gewichtskraft des Dachsystems oder die Gewichtskraft von mindestens einem Photovoltaikmodul oder die Gewichtskraft von einem Dachsystem mit mindestens einem Photovoltaikmodul. Weiterhin umfasst eine auf das Dachsystem und/oder mindestens ein Photovoltaikmodul wirkende Gewichtskraft eine Gewichtskraftkomponente von Niederschlag, insbesondere auf dem Dachsystem und/oder Photovoltaikmodul angeordneter Schnee und/oder angeordnetes Eis. Somit ist der mindestens eine Lastkontrollsensor zum Messen eines Gewichts eines aufgelegten Belastungsgegenstands ausgebildet.

Insbesondere ist der mindestens eine Lastkontrollsensor ausgebildet und eingerichtet, einen Teil einer Gesamtgewichtskraft eines Dachsystems und/oder mindestens eines Photovoltaikmoduls zu messen. In Ausführungsformen liegt ein Dachsystem an mehreren Auflagepunkten auf einer Dachfläche auf, sodass ein Lastkontrollsensor, welcher an genau einem Auflagepunkt angeordnet ist, nur einen Teil der Gesamtgewichtskraft des Dachsystems detektiert. Beispielsweise ist vorgesehen, dass eine Gesamtgewichtskraft mittels mehrerer Lastkontrollsensoren ermittelbar ist und/oder ermittelt wird.

In einer anderen Ausführungsform ist vorgesehen, dass ein Lastkontrollsensor auf einer Auflagefläche einer Modulstütze angeordnet ist. Hierdurch wird direkt eine Gewichtskraft eines auf die Auflagefläche aufgelegten Photovoltaikmoduls, einschließlich eventueller Niederschläge, gemessen.

In einer Ausführungsform ist vorgesehen, dass das Dachsystem mehrere Bodenschienen zum Verbinden und Beabstanden von jeweils mindestens zwei Modulstützen aufweist, wobei die Bodenschienen jeweils eine der Dachfläche zugewandte Bodenschienenunterseite aufweisen, wobei insbesondere die Heizvorrichtung an und/oder in mindestens einer Bodenschiene und/oder mindestens einer Modulstütze angeordnet ist und/oder wobei insbesondere mindestens ein Lastkontrollsensor an einer Bodenschienenunterseite und/oder an einer Unterseite mindestens einer Modulstütze angeordnet ist. Dadurch wird die Stabilität eines Dachsystems und damit die Sicherheit des Betriebs erhöht.

Eine Bodenschiene ist insbesondere mittels Schrauben und/oder mittels Einstecken mit mindestens einer Modulstütze verbindbar. Insbesondere ist mindestens eine Modulstütze, insbesondere sind die Modulstützen, formkomplementär zu den Bodenschienen ausgebildet.

Bevorzugterweise weist das Dachsystem mindestens ein Ballastgewicht zum Beschweren des Dachsystems auf, wobei insbesondere mindestens ein Ballastgewicht auf einer Oberseite einer Bodenschiene angeordnet und/oder mit einer Bodenschiene verbunden ist.

Ferner ist in einer Ausführungsform vorgesehen, dass die Heizvorrichtung einen Temperatursensor und eine Heizsteuereinheit zum Steuern oder Regeln der Heizvorrichtung aufweist, wobei die Heizsteuereinheit ausgebildet und eingerichtet ist, vom Temperatursensor gemessene Temperaturdaten zu verarbeiten und in Abhängigkeit der Temperaturdaten die Heizvorrichtung anzusteuern. Dies ermöglicht einen effizienten und ressourcenschonenden Einsatz der Heizvorrichtung.

Insbesondere ist mindestens ein Temperatursensor vorgesehen. Bevorzugterweise ist ein Temperatursensor als Umgebungstemperatursensor ausgebildet. Beispielsweise ist die Heizsteuereinheit ausgebildet und eingerichtet, bei Unterschreiten einer vorbestimmbaren unteren Temperaturschranke die Heizvorrichtung zu aktivieren und/oder bei Überschreiten einer vorbestimmbaren oberen Temperaturschranke die Heizvorrichtung zu deaktivieren. Anstelle von einem Aktivieren bzw. Deaktivieren sind auch ein Erhöhen bzw. ein Vermindern einer Heizleistung der Heizvorrichtung ansteuerbar. In einem Ausführungsbeispiel ist die untere Temperaturschranke 3° C und die obere Temperaturschranke 7° C.

In einer anderen Ausführungsform ist ein Temperatursensor als Modulstützentemperatursensor ausgebildet. In Abhängigkeit der gemessenen Temperatur einer Modulstütze ist vorgesehen, dass die Heizsteuereinheit die Heizvorrichtung ansteuert. Beispielsweise ist die Heizsteuereinheit zum Regeln einer Modulstützentemperatur auf einen vorbestimmten Temperaturwert ausgebildet.

Ferner ist in einer Ausführungsform vorgesehen, dass die Heizvorrichtung mindestens einen Heizdraht aufweist, wobei der mindestens eine Heizdraht in mindestens eine Modulstütze eingefügt ist. Dies bewirkt effiziente Wärmekopplung und geringen Aufwand beim Aufbau des Dachsystems. In einer Ausführungsform ist der Heizdraht in mindestens eine Bodenschiene eingefügt.

Insbesondere weist die Heizvorrichtung mindestens einen Heizdraht und/oder mindestens eine Heizschleife auf. Ein Heizdraht ist insbesondere ein Heizleiter. Bevorzugterweise weist die Heizvorrichtung einen Heizdraht in Form einer Heizwendel auf. In Ausführungsformen ist das Dachsystem, insbesondere teilweise, mit einem Heizdraht umwickelt.

Bevorzugterweise sind zwischen Modulstützen und Photovoltaikmodulen und/oder zwischen Modulstützen und Bodenschienen wärmeleitfähige Auflagen und/oder wärmeleitfähige Kontaktpaste zur Verbesserung des thermischen Kontakts angeordnet. Aufgrund von thermischer Leitfähigkeit des Dachsystems bewirkt ein Beheizen eines Teiles des Dachsystems ebenfalls ein Beheizen anderer Teile des Dachsystems. Insbesondere ist mittels einer Heizsteuereinheit vorgesehen, unterschiedliche Teile der Heizvorrichtung in Abhängigkeit von Temperaturdaten unterschiedlicher Temperatursensoren unterschiedlich anzusteuern.

Ferner ist in einer Ausführungsform vorgesehen, dass die Modulstützen in der Höhe mechanisch und/oder mittels einer elektrischen Stützhöhensteuereinheit einstellbar sind, wobei insbesondere die Modulstützen jeweils einen Modulstützfuß und einen Modulstützkopf aufweisen, wobei jeweils der Modulstützfuß auswechselbar und/oder mittels einer Rastvorrichtung höhenverstellbar mit dem jeweiligen Modulstützkopf verbunden oder verbindbar ist. Dies ermöglicht eine flexible Anpassung des Neigungswinkels von Photovoltaikmodulen und damit eine Erhöhung der Effizienz.

Bevorzugterweise ist die elektrische Stützhöhensteuereinheit eine elektronische Stützhöhensteuereinheit. Beispielsweise weist die Stützhöhensteuereinheit einen Aktuator auf, wobei mittels des Aktuators die Höhe mindestens einer Modulstütze einstellbar ist.

Insbesondere sind die Modulstützen zum Einstellen der Höhe zweistückig oder mehrstückig ausgeführt. Insbesondere weisen die Modulstützen jeweils einen Modulstützfuß zur Anordnung auf einer Dachfläche und einen Modulstützkopf zur Anordnung auf dem Modulstützfuß auf. Vorzugsweise sind verschiedene, insbesondere verschieden hohe, Modulstützfüße und Modulstützköpfe, miteinander koppelbar. In einer weiteren Ausführungsform weisen die Modulstützen jeweils eine Rastvorrichtung zur Verbindung des Modulstützfu-ßes mit dem Modulstützkopf auf. Insbesondere sind mehrere Rastpositionen vorgesehen, in welchen jeweils eine stabile Modulstütze zum Auflegen von mindestens einem Photovoltaikmodul bereitgestellt wird, die eine andere Höhe als die zu den anderen Rastpositionen gehörigen Höhen der Modulstütze aufweist.

Ferner ist in einer Ausführungsform vorgesehen, dass das Dachsystem eine Lastkontrolleinheit zum Verarbeiten der Lastdaten aufweist, wobei der mindestens eine Lastkontrollsensor eingerichtet und ausgebildet ist, die gemessenen Lastdaten der Lastkontrolleinheit zur Verfügung zu stellen, wobei die Lastkontrolleinheit ausgebildet und eingerichtet ist, in Abhängigkeit der Lastdaten eine auf das Dachsystem und/oder mindestens ein Photovoltaikmodul wirkende Gewichtskraft als Last zu bestimmen, wobei insbesondere die Lastkontrolleinheit ausgebildet und eingerichtet ist, eine Zusatzlast im Vergleich mit einer Referenzlast, insbesondere zur Bestimmung von Niederschlag, zu bestimmen. Durch eine Lastkontrolleinheit, welche die Lastdaten der Lastkontrollsensoren überwacht, wird die Betriebssicherheit des Photovoltaiksystems erhöht. Bevorzugterweise ist die Lastkontrolleinheit eine elektronische Lastkontrolleinheit. Beispielsweise ist eine Referenzlast das Gewicht eines Dachsystems mit aufgelegten Photovoltaikmodulen. Die Zusatzlast, also die Differenz einer aktuell gemessenen Last und der Referenzlast, ergibt sich zum Beispiel aus Umwelteinflüssen wie Eis und Schnee, welche auf den Photovoltaikmodulen liegen.

Insbesondere ist die Lastkontrolleinheit ausgebildet und eingerichtet, in Abhängigkeit der Last die Heizvorrichtung anzusteuern, insbesondere bei Überschreiten einer vorbestimmten Zusatzlast die Heizvorrichtung zu aktivieren, und/oder in Abhängigkeit der Last eine Stützhöhensteuereinheit anzusteuern. Um die Sicherheit und Stromerzeugungseffizienz der Photovoltaikanlage zu gewährleisten, sind Gegenmaßnahmen bei Überschreiten einer vorbestimmten Zusatzlast vorgesehen. Beispielsweise ist vorgesehen, die Heizvorrichtung zu aktivieren oder eine Heizleistung der Heizvorrichtung zu erhöhen, sofern eine übermäßige Menge von Schnee und Eis detektiert wird. Alternativ ist der Neigungswinkel der Photovoltaikmodule veränderbar, beispielsweise zum Erhöhen des Neigungswinkels, um die Last durch zukünftigen Niederschlag zu verringern.

Ferner ist in einer Ausführungsform vorgesehen, dass das Dachsystem eine Absturzsicherung zum Absichern eines Arbeitsbereichs, insbesondere auf einer Dachfläche, aufweist, wobei insbesondere die Absturzsicherung
(a) ein bewegbares, insbesondere fahrbares, Gestell mit einem Geländer zum Abgrenzen des Arbeitsbereichs von einem Gefahrenbereich aufweist, wobei die Absturzsicherung eine Führungsschiene zum Führen des Gestells aufweist, wobei das Gestell mit der Führungsschiene wirkverbunden ist und das Gestell mittels der Führungsschiene zwangsgeführt ist, wobei das Gestell im Wesentlichen in eine horizontale Bewegungsrichtung bewegbar ist, und/oder
(b) einen der Dachfläche zugewandten Sockelabschnitt aufweist, wobei insbesondere die Absturzsicherung einen der Dachfläche abgewandten Funktionsabschnitt aufweist, wobei das Dachsystem mindestens eine, insbesondere stabförmige, Kopplungstraverse zum Koppeln der Absturzsicherung mit einer Modulstütze aufweist, wobei die mindestens eine Kopplungstraverse in einem ersten Abschnitt mit einer Modulstütze verbindbar oder verbunden ist und wobei die mindestens eine Kopplungstraverse in einem zweiten Abschnitt mit dem Sockelabschnitt der Absturzsicherung verbindbar oder verbunden ist, und/oder
(c) eine Individualabsturzauffangeinrichtung, insbesondere ein Seilsicherungssystem oder Schienensicherungssystem, zur Absturzsicherung in Zusammenwirken mit persönlicher Schutzausrüstung aufweist, wobei die Individualabsturzauffangeinrichtung mit mindestens einer Modulstütze verbunden ist, wobei die mindestens eine Modulstütze ausgebildet und eingerichtet ist, mindestens ein aufliegendes Photovoltaikmodul als Gegengewicht mit der Individualabsturzauffangeinrichtung zu verknüpfen.

Mittels einer Absturzsicherung wird die Betriebssicherheit einer auf dem Dachsystem aufgelegten Photovoltaikanlage erhöht, indem ein Arbeitsbereich zum Warten der Photovoltaikanlage abgesichert wird.

Mit einer Absturzsicherung mit einem bewegbaren Gestell wird ein bewegbares Geländer zum Abgrenzen und Absichern eines Arbeitsbereichs, insbesondere auf einem Dach eines Gebäudes, insbesondere Flachdach, genutzt. Ein bewegbares, zwangsgeführtes Gestell weist ein Geländer auf, so dass ein vom Geländer geschützter Arbeitsbereich und ein Gefahrenbereich getrennt werden. Der Arbeitsbereich für eine Person ist mittels Bewegen des bewegbaren Gestells, insbesondere mittels Verfahren eines fahrbaren Gestells, verschiebbar. Die jeweilige Position des Gestells bestimmt die jeweilige Position des Arbeitsbereichs, zum Beispiel auf einer Dachfläche, insbesondere einem Flachdach, eines Gebäudes. Die möglichen Positionen des Gestells sind durch die Anordnung der Führungsschiene gegeben. Zudem ist die Führungsschiene vorteilhafterweise an einer Dachfläche befestigt, sodass ebenfalls das Geländer befestigt ist.

Bei einer mittels einer Kopplungstraverse mit einer Modulstütze gekoppelten Absturzsicherung wird eine Absturzsicherung, insbesondere ein Absturzsicherungsgestell, gemeinsam mit mindestens einem Photovoltaikmodul auf einer Dachfläche angeordnet und befestigt. Durch eine Verbindung von Absturzsicherung und Photovoltaikmodul wird eine gegenseitige Ballastierung und eine stabile Anordnung auf der Dachfläche erreicht. Die Nutzung des Dachsystems bewirkt eine geringe Gewichtsbelastung der Dachfläche, denn das Gewicht der Photovoltaikmodule wird zur Befestigung der Absturzsicherung genutzt. Ein weiterer Vorteil ist, dass die Nutzung eines erfindungsgemäßen Dachsystems ressourcenschonend ist, indem keine zusätzlichen Gewichte zur Ballastierung nötig sind.

In einer solchen Ausführungsform mit Kopplungstraverse weist die Absturzsicherung, insbesondere das Absturzsicherungsgestell, einen der Dachfläche zugewandten Sockelabschnitt auf, wobei der Sockelabschnitt vorzugsweise der Abschnitt der Absturzsicherung ist, der an der Dachfläche angeordnet ist. Vorzugsweise weist die Absturzsicherung einen der Dachfläche abgewandten Funktionsabschnitt auf, wobei der Funktionsabschnitt hauptsächlich zur Sicherung vor Abstürzen, also zur Absicherung von Personen, vorgesehen ist.

Eine Individualabsturzauffangeinrichtung ist insbesondere ein Seilsicherungssystem oder Schienensicherungssystem. Eine Individualabsturzauffangeinrichtung ist bevorzugterweise zum Zusammenwirken mit persönlicher Schutzausrüstung, zum Beispiel einem Auffanggurt mit Falldämpfer, ausgebildet und eingerichtet.

In einer Ausführungsform ist vorgesehen, dass die Individualabsturzauffangeinrichtung mit mindestens einer Modulstütze verbunden ist. Hierdurch sind auf dem Dachsystem aufliegende Photovoltaikmodule als Gegengewicht mit der Individualabsturzauffangeinrichtung wirkverbunden. Dies verringert die Belastung des Flachdachs bei gleichbleibend sicherem Betrieb der technischen Anlage sowie der Absturzsicherung.

Ein Geländer ist insbesondere eine Seitenschutzvorrichtung, wobei insbesondere eine Seitenschutzvorrichtung ein temporäres Geländer ist. In einer Ausführungsform ist das Geländer als Brüstung ausgebildet, wobei insbesondere eine Brüstung eine geschlossene, insbesondere massiv ausgeführte, Wandscheibe aufweist.

Vorteilhafterweise ist das Geländer, insbesondere in einer Arbeitsposition, vertikal ausgerichtet. Insbesondere weist das Geländer, insbesondere zumindest teilweise, eine Längserstreckung in der Bewegungsrichtung des Gestells auf. Vorzugsweise ist das Geländer als Gitter oder gitterartig ausgebildet.

Vorzugsweise ist das bewegbare Gestell entlang der Führungsschiene in horizontaler Richtung bewegbar und/oder im Wesentlichen horizontal zwangsgeführt. Insbesondere ist das Gestell in mehrere im Wesentlichen horizontale Bewegungsrichtungen bewegbar. Dies ist beispielsweise der Fall, wenn die Führungsschiene eine Kurve aufweist oder um eine Ecke geführt wird.

In einer Ausführungsform ist das bewegbare Gestell mittels genau oder ausschließlich einer Führungsschiene zwangsgeführt, wobei insbesondere die genau eine Führungsschiene mehrere in Längserstreckung hintereinander angeordnete Führungsschienensegmente umfasst. Vorzugsweise ist die Führungsschiene lösbar oder unlösbar an einer Dachfläche, insbesondere Flachdach, oder an einer Gebäudewand befestigt. In einer anderen Ausführungsform weist die Absturzsicherung mehrere Führungsschienen auf.

Das bewegbare Gestell ist vorzugsweise manuell, insbesondere handbetrieben, bewegbar. Alternativ ist ein Antrieb für die Bewegung, insbesondere in der horizontalen Bewegungsrichtung, des Gestells vorgesehen.

Ferner ist vorteilhafterweise vorgesehen, dass die Führungsschiene eine Längserstreckung aufweist, wobei die Längserstreckung im Wesentlichen horizontal ausgerichtet ist, wobei insbesondere die Führungsschiene eine lineare Führungsschiene ist. Eine horizontale längs erstreckte Führungsschiene ermöglicht ein zuverlässiges Bewegen in horizontaler Bewegungsrichtung des Gestells und damit des Geländers. Insbesondere ist das Gestell entlang der Längserstreckung der Führungsschiene zwangsgeführt.

Vorzugsweise ist die Führungsschiene eine, insbesondere gerade oder gekrümmte, Linearführung. Vorteilhafterweise weist eine Führungsschiene eine Krümmung oder einen Bogenabschnitt auf, beispielsweise sodass das Gestell in mehrere horizontale Bewegungsrichtungen bewegbar ist bzw. das Gestell eine Kurvenbewegung ausführt. So ermöglicht zum Beispiel eine gekrümmte oder gebogene Führungsschiene eine Zwangsführung des Gestells zum Umfahren einer Ecke z.B. Dachecke. Vorteilhafterweise weist die Führungsschiene in mindestens einem Abschnitt eine 90-Grad-Krümmung oder einen Bogenabschnitt auf. In einer Ausführungsform ist die Führungsschiene ringförmig und/oder geschlossen umlaufend ausgebildet. Auf diese Weise ist beispielsweise eine Führungsschiene eine Dachfläche umlaufend vorgesehen. Vorzugsweise ist vorgesehen, dass das Gestell entlang eines geschlossenen Bewegungspfads, insbesondere mittels der Führungsschiene zwangsgeführt, bewegbar ist.

In einer Ausführungsform ist das Geländer, zumindest teilweise, parallel zur Führungsschiene angeordnet.

Vorteilhafterweise ist die Führungsschiene in einem vorbestimmten Abstand seitlich, insbesondere horizontal versetzt, vom Gestell angeordnet.

Insbesondere weist das Geländer gegenüber der Führungsschiene einen horizontalen Abstand auf. In einer Ausführungsform ist das Geländer gegenüber der Führungsschiene horizontal beabstandet.

Ferner wird eine zuverlässige Beweglichkeit des Gestells und damit eine einfache Bedienung der Absturzsicherung erreicht, wenn das Gestell mindestens eine Laufrolle zum Verfahren des Gestells aufweist, wobei insbesondere das Gestell mindestens zwei Laufrollen aufweist und die mindestens zwei Laufrollen einen gleichen Abstand von der Führungsschiene aufweisen und in der Bewegungsrichtung des Gestells voneinander beabstandet sind. Dass die Laufrollen in der Bewegungsrichtung hintereinander laufen, erlaubt eine symmetrische Belastung eines Untergrunds, insbesondere der Dachfläche, sowie der Führungsschiene.

Insbesondere weist das Gestell mindestens zwei Laufrollen auf, wodurch die Stabilität des Gestells erhöht wird. Insbesondere sind die mindestens zwei Laufrollen auf einer parallel zur Führungsschiene verlaufenden, gedachten Linie angeordnet.

In einer Ausführungsform ist die mindestens eine Laufrolle zum Laufen in der als Laufschiene ausgebildeten Führungsschiene ausgebildet. In einer anderen Ausführungsform ist die mindestens eine Laufrolle ausgebildet, in einer Laufspur zu laufen, die nicht von der Führungsschiene gebildet ist. In dieser Ausführungsform ist die Führungsschiene nicht zum unmittelbaren Führen der Laufrolle ausgebildet. Dabei ist die mindestens eine Laufrolle mittelbar, und nicht unmittelbar, von der Führungsschiene zwangsgeführt.

Ferner ist vorteilhafterweise vorgesehen, dass das Gestell mittels mindestens einer Verbindungseinrichtung mit der Führungsschiene verbunden ist, wobei insbesondere die mindestens eine Verbindungseinrichtung jeweils einen zum Laufen auf der Führungsschiene eingerichteten Schienenschlitten aufweist und/oder wobei insbesondere die mindestens eine Verbindungseinrichtung, insbesondere der jeweilige Schienenschlitten, lösbar an der Führungsschiene befestigt ist. Mittels einer Verbindungseinrichtung ist eine zuverlässige und sichere Verbindung von Gestell und Führungsschiene möglich. Ist die Verbindungseinrichtung lösbar ausgeführt, ist zudem eine einfache Montage und Demontage möglich.

Insbesondere weist ein Schienenschlitten mindestens zwei, insbesondere mindestens vier, Schlittenlaufrollen auf, wobei vorteilhafter Weise die Schlittenlaufrollen zum Laufen auf der Führungsschiene ausgebildet sind. Insbesondere ist ein Schienenschlitten ein bewegliches Maschinenelement in einer Gleitführung, wobei hier in einer Ausführungsform die Führungsschiene eine Gleitführung aufweist. In Ausführungsformen ist der Schienenschlitten ein Laufwagen, ein Rollenläufer oder eine Laufkatze.

Vorteilhafterweise ist das Gestell mittels der Verbindungseinrichtung, insbesondere mittels des Schienenschlittens, entlang einer Längserstreckung der Führungsschiene zwangsgeführt. Vorzugsweise ist die Verbindungseinrichtung, insbesondere der Schienenschlitten, zur Führungsschiene form- und/oder funktionskomplementär ausgebildet. Insbesondere weist die Verbindungseinrichtung, insbesondere der Schienenschlitten, ein zu einer Führungsschiene formkomplementäres Laufprofil auf.

Ferner ist zur besseren Stabilität und Handhabung der Absturzsicherung vorgesehen, dass das Gestell mindestens eine Beabstandungstraverse zum, insbesondere horizontalen, Beabstanden des Geländers von der Führungsschiene aufweist, wobei die mindestens eine Beabstandungstraverse jeweils ein der Führungsschiene zugewandtes erstes Ende und jeweils ein dem Geländer zugewandtes zweites Ende aufweist, wobei das jeweils erste Ende der mindestens einen Beabstandungstraverse mittels jeweils einer ersten Befestigungsvorrichtung an mindestens einer der mindestens einen Verbindungseinrichtung befestigt ist, wobei insbesondere die mindestens eine Beabstandungstraverse derart ausgebildet ist, dass ein Abstand zwischen Geländer und Führungsschiene einstellbar ist und/oder dass die mindestens eine Beabstandungstraverse eine einstellbare Länge aufweist. Die mindestens eine Beabstandungstraverse bezweckt eine Beabstandung des Geländers von der Führungsschiene, wobei durch die Beabstandungstraverse eine Wirkverbindung zwischen der Führungsschiene und dem Geländer sichergestellt ist. Vorteilhafterweise ist das jeweils zweite Ende der mindestens einen Beabstandungstraverse mittels einer jeweils zweiten Befestigungsvorrichtung am Geländer befestigt.

Durch eine Beabstandungstraverse mit einstellbarer Länge oder die Einstellbarkeit des Abstands zwischen Geländer und Beabstandungstraverse wird eine flexible Verwendung und einfache Anpassung der Absturzsicherung für unterschiedliche Orte ermöglicht. Dort, wo viel Platz zur Verfügung steht, kann die einstellbare Länge oder der Abstand vergrößert werden, sodass der Arbeitsbereich ebenfalls vergrößert und dadurch komfortabler wird. Ist an einem Ort nur wenig Platz verfügbar, beispielsweise aufgrund von anderen technischen Anlagen oder eines Endes des Daches, wird die einstellbare Länge oder der Abstand verringert. Weiterhin ist vorgesehen, dass ein Geländer mit unterschiedlichen Beabstandungstraversen, insbesondere mit Beabstandungstraversen unterschiedlicher Länge, verwendbar ist. Die Länge einer Beabstandungstraverse ist hierbei die Längserstreckung einer Beabstandungstraverse.

Eine, insbesondere erste oder zweite Befestigungsvorrichtung ist insbesondere eine Schraubvorrichtung, eine Klemmvorrichtung oder eine Steckvorrichtung. In einer Ausführungsform ist eine Befestigungsvorrichtung als eine Verschweißung ausgebildet.

Vorteilhafterweise ist jede Laufrolle, insbesondere starr, mit einer Beabstandungstraverse und/oder mit dem Geländer verbunden. In diesem Zusammenhang bezeichnet starr verbunden eine derartige Verbindung, dass die Laufrolle nur drehbar um die Laufrollenachse ist.

Ferner weist das Gestell mindestens zwei, insbesondere zwei, Beabstandungstraversen auf, wobei die Beabstandungstraversen in der Bewegungsrichtung des Gestells voneinander beabstandet sind, wobei insbesondere die Beabstandungstraversen parallel zueinander angeordnet und/oder senkrecht zur Führungsschiene angeordnet sind. Zwei Beabstandungstraversen erhöhen die Stabilität der Absturzsicherung und die Beweglichkeit des Gestells.

In einer Ausführungsform sind mindestens zwei Beabstandungstraversen vorgesehen. Vorteilhafterweise sind zwei Beabstandungstraversen zwischen zwei Laufrollen angeordnet. Insbesondere sind zwei Laufrollen auf voneinander abgewandten Seiten zweier Beabstandungstraversen angeordnet.

Vorteilhafterweise ist die mindestens eine Beabstandungstraverse im Wesentlichen horizontal angeordnet.

Ferner ergibt sich eine komfortablere Benutzbarkeit für unebene Dachflächen, wenn die mindestens eine Verbindungseinrichtung, insbesondere Schienenschlitten, jeweils ein, insbesondere erstes, Drehgelenk aufweist und das jeweilige, insbesondere das jeweils erste, Drehgelenk mit dem Gestell, insbesondere mit mindestens einer der mindestens einen Beabstandungstraverse, verbunden ist und/oder dass das Gestell mindestens ein, insbesondere zweites, Drehgelenk aufweist und mindestens eine der mindestens einen Beabstandungstraverse mittels jeweils einem, insbesondere zweiten, Drehgelenk mit dem Geländer verbunden ist.

Insbesondere ist eine Befestigungsvorrichtung, insbesondere eine erste Befestigungsvorrichtung und/oder eine zweite Befestigungsvorrichtung, als Drehgelenk ausgebildet. Vorteilhafterweise ist ein Drehgelenk derart ausgebildet, dass die jeweilige Beabstandungstraverse um genau eine Drehachse drehbar ist, wobei insbesondere die Drehachse zur Führungsschiene parallel verlaufend ist.

Ferner ist für eine flexiblere Montage vorgesehen, dass die mindestens eine Beabstandungstraverse lösbar an einer der mindestens einen Verbindungseinrichtung, insbesondere am jeweiligen Schienenschlitten, befestigt ist. Somit ist das Gestell, insbesondere das Geländer, lösbar an der Führungsschiene befestigt. In einer anderen Ausführungsform ist das Geländer lösbar an mindestens einer Beabstandungstraverse befestigt.

In einer weiteren Ausführungsform weist die Führungsschiene, insbesondere an einem Ende der Führungsschiene, eine Sperrvorrichtung zum Sperren einer Bewegung einer Verbindungseinrichtung, insbesondere eines Schienenschlittens, auf. Insbesondere ist die Sperrvorrichtung ausgebildet, dass die Verbindungseinrichtung bei Bewegung des Gestells auf der Führungsschiene verbleibt. Vorteilhafterweise ist die Sperrvorrichtung lösbar an der Führungsschiene befestigt. Eine lösbare Befestigung ermöglicht ein einfaches Entfernen der Sperrvorrichtung und damit ein einfaches Entfernen der Verbindungseinrichtung einschließlich des Gestells. Insbesondere weist die Führungsschiene an zwei Enden jeweils eine Sperrvorrichtung auf.

Ferner ist vorteilhafterweise vorgesehen, dass das Geländer, insbesondere um eine horizontale Achse, klappbar und/oder faltbar ist. Insbesondere ist die Höhe des Geländers veränderbar. Hieraus ergibt sich der Vorteil, dass das Geländer im eingeklappten und/oder eingefalteten Zustand keinen Schatten auf benachbarte Teile der Dachfläche wirft. Dies ist insbesondere bei Photovoltaik- oder Solarthermie-Anlagen nützlich. In einer anderen Ausführungsform ist das Gestell klappbar und/oder faltbar.

Ferner wird eine größere Arbeitssicherheit erreicht, wenn mittels des Geländers entlang der Bewegungsrichtung des Gestells der Arbeitsbereich von einem Gefahrenbereich abgegrenzt oder abgrenzbar ist und/oder dass mittels des Geländers quer zur Bewegungsrichtung des Gestells ein Arbeitsbereich von einem, insbesondere zweiten, Gefahrenbereich abgegrenzt oder abgrenzbar ist.

Insbesondere weist das Geländer mehrere Geländerabschnitte auf, wobei das Geländer den Arbeitsbereich zu mehreren Seiten den Arbeitsbereich vom Gefahrenbereich abgrenzt. Vorteilhafterweise weist das Geländer einen parallel zur Führungsschiene ausgerichteten Parallelgeländerabschnitt auf, wobei insbesondere das Geländer mindestens einen, insbesondere zwei, senkrecht zur Führungsschiene ausgerichteten Senkrechtgeländerabschnitt aufweist. Vorteilhafterweise weist der Halteabschnitt des Geländers mindestens einen Parallelgeländerabschnitt und mindestens einen Senkrechtgeländerabschnitt auf. In einer anderen Ausführungsform ist das Geländer parallel zur Führungsschiene angeordnet.

In einer Ausführungsform weist das Geländer eine Geländertür auf. Insbesondere ist die Geländertür als eine Geländerpforte oder dergleichen ausgebildet. Dies ermöglicht ein Durchschreiten des Geländers durch einen Benutzer, beispielsweise um einen Gefahrenbereich zu betreten. Hierzu ist der Benutzer vorteilhafterweise mit einem anderen Sicherungssystem als der Absturzsicherung gesichert. Vorteilhafterweise ist die Geländertür selbstschließend und/oder mit einer Verriegelungsvorrichtung versehen. Insbesondere ist die Verriegelungsvorrichtung eine Schließvorrichtung. Vorteilhafterweise ist die Geländertür parallel zur Bewegungsrichtung des Gestells angeordnet. In einer anderen Ausführungsform ist die Geländertür quer zur Bewegungsrichtung des Gestells angeordnet.

Ferner wird die Stabilität der Absturzsicherung erhöht, wenn mindestens eine der mindestens einen Laufrolle eine Arretiervorrichtung zum Arretieren der Laufrolle aufweist. Die Stabilität der Absturzsicherung wird ebenfalls erhöht, wenn mindestens eine der mindestens einen Verbindungseinrichtung eine Arretiervorrichtung zum Arretieren der Verbindungseinrichtung an der Führungsschiene aufweist. Insbesondere weist ein Schienenschlitten eine Arretiervorrichtung auf.

Eine Arretiervorrichtung, insbesondere an einer Laufrolle und/oder an einer Verbindungseinrichtung, befestigt vorübergehend das Gestell und damit das Geländer an einer Position, sodass der Arbeitsbereich für einen vorgegebenen Zeitraum festgelegt ist.

Außerdem weist die Absturzsicherung eine Schienenhaltevorrichtung für die Führungsschiene auf und die Führungsschiene ist von der Schienenhaltevorrichtung gehalten, wobei insbesondere die Schienenhaltevorrichtung ausgebildet ist, die Führungsschiene mit einem Dachanlagensystem, insbesondere mindestens einer Modulstütze, unlösbar oder lösbar zu verbinden. Auf diese Weise wird die Sicherheit und der Komfort der Benutzung weiter erhöht.

Ferner weist in anderen Ausführungsformen eine Kopplungstraverse einen runden Querschnitt oder einen rechteckigen Querschnitt oder einen andersförmigen Querschnitt auf. Bevorzugterweise ist die Form einer Kopplungstraverse angepasst an die Verbindung zur Modulstütze und zur Verbindung an die Absturzsicherung. Mittels mindestens einer Kopplungstraverse sind eine Modulstütze und die Absturzsicherung beabstandet. Durch die Beabstandung von Modulstütze und Absturzsicherung wird ein abgesicherter Arbeitsbereich für Personen ausgebildet. Die mindestens eine Kopplungstraverse ist in bevorzugten Ausführungsformen entlang ihrer Längserstreckung parallel zur Dachfläche verlaufend ausgebildet.

Vorzugsweise zeichnet sich das Dachsystem dadurch aus, dass die Absturzsicherung mindestens eine Befestigungsvorrichtung, insbesondere einen Klappmechanismus, zur Befestigung einer Kopplungstraverse an der Absturzsicherung aufweist, wobei insbesondere die Befestigungsvorrichtung im Sockelabschnitt der Absturzsicherung angeordnet ist und/oder wobei insbesondere die Kopplungstraverse in dem zweiten Abschnitt mittels der Befestigungsvorrichtung mit dem Sockelabschnitt der Absturzsicherung verbindbar oder verbunden ist. In bevorzugten Ausführungsformen ist mindestens eine Kopplungstraverse mittels eines Klappmechanismus an der Absturzsicherung befestigt. Dies ist vorteilhaft für einen einfachen Transport und schnellen Aufbau des Dachsystems.

Ferner zeichnet sich bevorzugterweise das Dachsystem dadurch aus, dass die Modulstützen jeweils mindestens eine Einschuböffnung, insbesondere jeweils mindestens zwei Einschuböffnungen, zum Einschieben einer Kopplungstraverse aufweisen, wobei insbesondere die Einschuböffnung mindestens einer Modulstütze ein, vorzugweise eine rechteckige oder eine Torbogen-förmige Grundform aufweisendes, Innenprofil aufweist und/oder wobei insbesondere die mindestens eine Kopplungstraverse in dem ersten Abschnitt form- und/oder funktionskomplementär in die mindestens eine Einschuböffnung eingeschoben oder einschiebbar ist. Durch die vorgesehene mechanische Passung wird eine Modulstütze stabil mit einer Kopplungstraverse ohne weitere Befestigung, d.h. befestigungsmittelfrei und/oder klemmmittelfrei, verbunden. Ist eine Kopplungstraverse passig in eine Einschuböffnung eingeschoben, so wird die Kopplungstraverse in mindestens zwei Richtungen unbeweglich. Eine Verkantung der Kopplungstraverse bewirkt eine stabile Verbindung der Modulstütze mit der Kopplungstraverse. In weiteren Ausführungsformen sind zusätzliche Aussparungen oder Vereinfachungen der Form an der Kopplungstraverse und/oder der Einschuböffnung vorgenommen. In bevorzugten Ausführungsformen weist eine Einschuböffnung ein Gewinde oder eine andere Befestigungsvorrichtung auf. Dies bewirkt zusätzliche Stabilität. Die Modulstützen weisen jeweils mindestens eine Einschuböffnung auf, insbesondere jeweils mindestens zwei Einschuböffnungen. Mehrere Einschuböffnungen ermöglichen es, mit einer Modulstütze mehrere Kopplungstraversen zu verbinden. In unterschiedlichen Ausführungsformen sind die Einschuböffnungen nebeneinander und/oder übereinander angeordnet. In weiteren Ausführungsformen sind die mindestens zwei Einschuböffnungen unterschiedlicher Größe und/oder weisen unterschiedliche Formen auf. Bevorzugterweise ist eine Modulstütze symmetrisch zu einer Spiegelachse, die senkrecht zur Dachfläche verläuft, ausgebildet, so dass formidentische Einschuböffnungen nebeneinander angeordnet sind. Dies ermöglicht beispielsweise eine einfachere Herstellung der Modulstützen.

Ferner zeichnet sich das Dachsystem dadurch aus, dass mindestens eine Modulstütze, insbesondere an der Unterseite der Modulstütze, eine Dachbefestigungseinrichtung zur Befestigung der Modulstütze an der Dachfläche, insbesondere eine Bohrung, aufweist. Eine Dachbefestigung mittels der Dachbefestigungseinrichtung bewirkt eine stabile Befestigung der Modulstütze an der Dachfläche. Dies ermöglicht ebenfalls eine ortsfeste Positionierung der Modulstütze, wenn keine Photovoltaikmodule auf die Modulstütze aufgelegt sind. Eine Dachbefestigungseinrichtung ist beispielsweise eine Bohrung für eine Schraube oder ein Ausleger bzw. ein Flügel, welcher mittels Bitumen verschweißt oder vergossen ist. In weiteren Ausführungsformen sind die Dachbefestigungseinrichtung eine Rastvorrichtung, ein Klemmverschluss und/oder ein Haken.

Vorzugsweise weist mindestens eine Modulstütze eine Modulbefestigungsvorrichtung zur Befestigung eines Photovoltaikmoduls auf, wobei mindestens eine Modulstütze eine Modulbefestigungsvorrichtung zur Befestigung eines Photovoltaikmoduls aufweist, wobei insbesondere die Modulbefestigungsvorrichtung als Klemmvorrichtung zum Festklemmen eines auf die Modulstütze aufgelegten Photovoltaikmoduls ausgebildet ist, wobei insbesondere die Klemmvorrichtung eine Klemmschiene mit einem form- und/oder funktionskomplementären Klemmsteg aufweist. In einer weiteren Ausführungsform ist die Modulbefestigungsvorrichtung als Bohrung für eine Schraube oder als eine Rastvorrichtung oder als eine Nutschraube oder als Nutensteinschraubsystem oder dergleichen ausgebildet. In einer anderen Ausführungsform ist die Modulbefestigungsvorrichtung eine metallische Kontaktfläche, welche mit dem Photovoltaikmodul bzw. dem Gehäuse des Photovoltaikmoduls verschweißt wird. Beispielsweise sind die Modulstützen derart ausgebildet, dass die Photovoltaikmodule ohne weitere Befestigung stabil auf den Modulstützen und damit dem Dachsystem aufliegen. Eine Modulbefestigungsvorrichtung bewirkt eine zusätzliche, lösbare oder unlösbare Verbindung. Insbesondere ist die Modulbefestigungsvorrichtung als Klemmvorrichtung zum Festklemmen eines auf die Modulstütze aufgelegten Photovoltaikmoduls ausgebildet. Dies ermöglicht eine schnelle und einfache Montage und zusätzliche Befestigung.

Vorzugsweise zeichnet sich das Dachsystem dadurch aus, dass die Absturzsicherung, mehrere Absturzsicherungsgestellsegmente umfasst, wobei mindestens ein Absturzsicherungsgestellsegment bewegbar, insbesondere klappbar und/oder in der Dachfläche versenkbar, ausgebildet ist, wobei insbesondere das mindestens eine bewegbare Absturzsicherungsgestellsegment mittels einer, insbesondere elektrischen oder elektronischen, Steuereinheit bewegbar ist, wobei insbesondere die Steuereinheit eine Aktuatorikeinheit zum Bewegen des mindestens einen bewegbaren Absturzsicherungsgestellsegments aufweist. Insbesondere sind in einer Ausführungsform mindestens ein oder mehrere Absturzsicherungsgestellsegmente mechanisch bewegbar.

Ferner ist in einer Ausführungsform vorgesehen, dass die Absturzsicherung, zumindest teilweise, mittels einer Fernbedienung elektrisch und/oder mechanisch bewegbar und/oder klappbar ist. Insbesondere ist ein bewegbares Gestell mittels der Fernbedienung entlang der Führungsschiene verschiebbar. Hierdurch ist beispielsweise ein Schattenwurf auf Photovoltaikmodule durch das bewegbare Gestell minimierbar. Zum Beispiel wird in Abhängigkeit des Sonnenstands das Gestell verschoben. Auf diese Weise wird die Effizienz der Photovoltaikmodule erhöht.

Weiterhin ist bevorzugterweise vorgesehen, dass die Absturzsicherung mittels einer Fernbedienung klappbar und/oder faltbar ist. Beispielsweise ist ein Absturzsicherungsgestell entlang einer horizontalen Achse oder entlang einer vertikalen Achse klappbar. Dies minimiert ebenfalls den Schattenwurf auf Photovoltaikmodule.

Ferner wird die Aufgabe gelöst durch die Verwendung eines voranstehend beschriebenen Dachsystems zur Anordnung von mindestens einem Photovoltaikmodul, insbesondere und mindestens einer Absturzsicherung, auf einer Dachfläche, insbesondere einem Flachdach.

Die Verwendung weist die gleichen Vorteile wie das bereits beschriebene Dachsystem auf. Zu möglichen Ausführungsformen sowie den technischen Vorteilen wird auf die obenstehenden Ausführungen verwiesen.

Schließlich wird die Aufgabe gelöst durch ein Photovoltaiksystem mit einem voranstehend beschriebenen Dachsystem und mindestens einem Photovoltaikmodul zum Anordnen des Photovoltaikmoduls auf einer Dachfläche, insbesondere einem Flachdach.

Das Photovoltaiksystem weist die gleichen Vorteile wie das bereits beschriebene Dachsystem auf. Zu möglichen Ausführungsformen sowie den technischen Vorteilen wird auf die obenstehenden Ausführungen verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische, perspektivische Ansicht eines ersten Ausführungsbeispiels eines Photovoltaiksystems mit einem Dachsystem,
- Fig. 2: eine schematische, perspektivische Ansicht eines zweiten Ausführungsbeispiels eines Dachsystems,
- Fig. 3: eine schematische, perspektivische Ansicht eines dritten Ausführungsbeispiels eines Dachsystems,
- Fig. 4: eine schematische Seitenansicht des dritten Ausführungsbeispiels eines Dachsystems,
- Fig. 5: eine abschnittsweise, schematische, perspektivische Ansicht eines vierten Ausführungsbeispiels eines Dachsystems, und
- Fig. 6: eine schematische Seitenansicht eines Ausführungsbeispiels einer Modulstütze.

In den Zeichnungen sind jeweils gleiche oder gleichartige Elemente und/oder Teile mit denselben Bezugsziffern versehen, so dass von einer erneuten Vorstellung jeweils abgesehen wird.

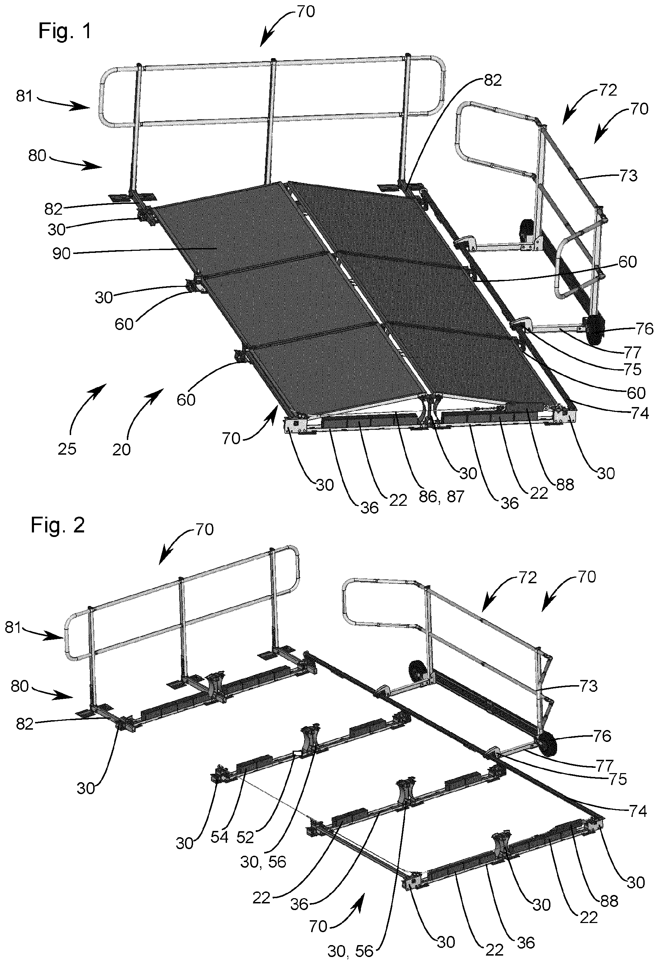

Fig. 1 zeigt eine schematische, perspektivische Ansicht eines ersten Ausführungsbeispiels eines Photovoltaiksystems 25 mit einem ersten Ausführungsbeispiel eines Dachsystems 20 und sechs Photovoltaikmodulen 90. Das Photovoltaiksystem 25 ist auf einer nicht dargestellten Dachfläche 92, einem Flachdach 94, angeordnet.

Die Photovoltaikmodule 90 sind auf Modulstützen 30 aufgelegt, wobei jeweils drei Modulstützen 30 mittels zweier Bodenschienen 36 verbunden sind. Da die Modulstützen 30 unterschiedliche Höhen aufweisen, insbesondere sind die mittig angeordneten Modulstützen 30 für als die außen angeordneten Modulstützen 30, sind die Photovoltaikmodulen 90 in einem Neigungswinkel gegenüber dem Flachdach 94 ungleich null aufgelegt. Auf den Bodenschienen 36 sind Ballastgewichte 22 zur Ballastierung des Dachsystems 20 angeordnet.

In diesem ersten Ausführungsbeispiel eines Dachsystems 20 mit aufgelegten Photovoltaikmodulen 90 sind die jeweils mittleren Modulstützen 30 in einer Höhe einstellbar. Hierzu weisen die jeweils mittleren Modulstützen 30 jeweils einen Modulstützfuß 42 und einen Modulstützkopf 44 auf, wobei jeweils der Modulstützfuß 42 mittels einer Rastvorrichtung 46 höhenverstellbar mit dem jeweiligen Modulstützkopf 44 verbunden ist. Also sind zwei Komponenten der Modulstützen 30 gegeneinander verschiebbar, sodass die Modulstützen 30 eine einstellbare Höhe aufweisen. In der Überblicksdarstellung in Fig. 1 ist der Mechanismus zur Höhenverstellung nicht näher dargestellt.

Weiterhin sind auf der Unterseite des Dachsystems 20 mehrere Lastkontrollsensor 60 vorgesehen. Diese sind insbesondere auf der Unterseite der Modulstützen 30 angeordnet und messen eine auf das Dachsystem 20 und/oder mindestens ein Photovoltaikmodul 90 wirkende Gewichtskraft als Lastdaten. In diesem Ausführungsbeispiel enthalten die Lastdaten das Gewicht der Modulstützen 30, der Ballastgewichte 22, der Photovoltaikmodulen 90, und teilweise der unten beschriebenen Absturzsicherungen 70.

Die Lastkontrollsensoren 60 sind ausgebildet und eingerichtet, die Lastdaten an eine Lastkontrolleinheit 62 zu übermitteln. Die Lastkontrolleinheit bestimmt in Abhängigkeit der Lastdaten eine Last, welche sich aus dem Gewicht des Dachsystems 20 und der Photovoltaikmodule 90 ergibt. Hierbei ist zu bemerken, dass jeder einzelne Lastkontrollsensor 60 nur anteilig die Gewichtskraft der aufliegenden Objekte misst. In Ausführungsformen ist vorgesehen, dass einige Modulstützen 30 direkt auf der Dachfläche 92 angeordnet sind und andere Modulstützen 30 auf einem Lastkontrollsensor 60, welche wiederum auf der Dachfläche 92 angeordnet ist. Aus einer solchen anteiligen Messung ist, insbesondere mittels einer Lastkontrolleinheit 62, eine Gesamtlast und/oder eine durchschnittliche Last pro Fläche bestimmbar. Im in Fig. 1 gezeigten Ausführungsbeispiel ist die Lastkontrolleinheit 62 unterhalb eines Photovoltaikmoduls 90 angeordnet und daher nicht dargestellt. Die Lastkontrolleinheit 62 ist mittels Kabelverbindungen mit den Lastkontrollsensor 60 verbunden.

Fig. 1 zeigt eine Absturzsicherung 70, die auf drei unterschiedliche Weisen ausgebildet ist. In der Figur rechts dargestellt ist ein Gestell 72 mit einem Geländer 73, welches mittels zweier Laufrollen 76 verschiebbar ist. Das Gestell 72 ist entlang einer Führungsschiene 74 zwangsgeführt und ist folglich linear bewegbar. Das Geländer 73 ist mittels zweier Beabstandungstraversen 77 von der Führungsschiene 74 beabstandet. An einem ersten Ende der Beabstandungstraversen 77 ist das Geländer 73 angeordnet und verbunden, während an einem zweiten Ende der Beabstandungstraversen 77 jeweils ein Schienenschlitten 75 zur Befestigung an und zur Zwangsführung entlang der Führungsschiene 74 befestigt ist. Hierdurch entsteht ein verschiebbarer Arbeitsbereich 96 auf dem Flachdach 94, welcher zwischen den beiden Beabstandungstraversen 77 sowie zwischen dem Geländer 73 und den Photovoltaikmodulen 90 liegt.

Weiterhin weist die Absturzsicherung 70 an der in Fig. 1 hinten dargestellten Seite des Dachsystems 20 einen Sockelabschnitt 80 sowie einen Funktionsabschnitt 81 auf. Der Funktionsabschnitt 81 ist als Geländer ausgeführt, welches einen Arbeitsbereich 96 zwischen dem Geländer und den Photovoltaikmodulen 90 von einem Gefahrenbereich abgrenzt. Der Sockelabschnitt 80 der Absturzsicherung 70 ist mittels Kopplungstraversen 82 von den Modulstützen 30 des Dachsystems 20 beabstandet. Ferner ist mittels der Kopplungstraversen 82 der Funktionsabschnitt 81 an die Modulstützen 30 gekoppelt, sodass das Gewicht der Photovoltaikmodule 90 und der Ballastgewichte 22 die Stabilität des Funktionsabschnitt 81 erhöht.

Derselbe Effekt der Ballastierung gilt ebenfalls für das Geländer 73 des bewegbaren Gestells 72, denn die Führungsschiene 74 ist an den Modulstützen 30 des Dachsystems 20 befestigt.

Schließlich weist das erste Ausführungsbeispiel eines Photovoltaiksystems 25 eine Individualabsturzauffangeinrichtung 86, die als Seilsicherungssystem 87 ausgebildet ist, auf. Hierzu ist ein Sicherungsseil entlang zweier Seiten des Dachsystems gespannt. Das Sicherungsseil ist an Modulstützen 30 befestigt und weist eine Feder 88 zum Abfedern eines Absturzes auf. Das Seilsicherungssystem 87 ist zum Zusammenwirken mit einer persönlichen Schutzausrüstung einer auf der Dachfläche 92 arbeitenden Person ausgebildet. Üblicherweise hakt sich eine Person mit einem Fallgurt in das Sicherungsseil ein. Während das bewegbare Gestell 72 und der Funktionsabschnitt 81 für jede Person im Arbeitsbereich 96 eine Absturzsicherung 70 darstellen, verhindert eine Individualabsturzauffangeinrichtung 86 nicht den Absturz an sich, aber ein tiefes Fallen und damit verbundene Verletzungen und/oder Schäden.

In Fig. 2 ist eine schematische, perspektivische Darstellung eines zweiten Ausführungsbeispiels eines Dachsystems 20 dargestellt. Das Dachsystem 20 weist eine Reihe von Modulstützen 30 unterschiedlicher Höhe auf. Weiterhin ist eine Absturzsicherung 70 vorgesehen, welche die gleichen Merkmale wie im ersten Ausführungsbeispiel eines Dachsystems, vgl. Fig. 1, aufweist. Beispielsweise ist ein bewegbares Gestell 72 sowie eine Individualabsturzauffangeinrichtung 86 mit einem Sicherungsseil und einer Feder 88 vorgesehen.

In Fig. 2 sind keine Photovoltaikmodule 90 abgebildet, sodass die darunter angeordneten Modulstützen 30 sowie die Ballastgewichte 22 und die Bodenschienen 36 sichtbar sind. An den querseitigen Enden des Dachsystems 20 sind mehr Ballastgewichte 22 vorgesehen als in der Mitte.

Weiterhin weist das Dachsystem 20 eine elektrisch betriebene Heizvorrichtung 50 auf. Eine Heizsteuereinheit 54 ist auf einer Bodenschiene 36 angeordnet und ist in einem Gehäuse, welches ähnlich zu einem Ballastgewicht 22 ausgebildet ist, angeordnet. Dies ermöglicht ein einfaches Befestigen an einer Bodenschiene 36. Die Heizsteuereinheit 54 ist zum Regeln der Heizvorrichtung 50 ausgebildet und eingerichtet.

In zwei Modulstützen 30 sind Heizdrähte 56 eingefügt, sodass die Modulstützen 30 mittels der Heizdrähte 56 erwärmbar sind. Die Heizdrähte 56 sind mittels der Heizsteuereinheit 54 ansteuerbar. Die Heizsteuereinheit 54 ist ferner ausgebildet, Temperaturdaten eines Temperatursensors 52 zu verarbeiten. Der Temperatursensor 52 misst die Temperatur nahe einer beheizten Modulstütze 30. In Abhängigkeit dieser Temperatur steuert die Heizsteuereinheit 54 die Heizdrähte 56 an. Sind beispielsweise für ein Dachsystem 20 Erfahrungswerte bekannt, welche Temperaturen auf der Oberseite eines Photovoltaikmoduls 90 herrschen, wenn eine vorgegebene Temperatur an der Position des Temperatursensors 52 gemessen wird, ist unter Zuhilfenahme dieser Erfahrungswerte ein Regeln möglich.

In einer anderen Ausführungsform ist vorgesehen, dass ein Temperatursensor 52 entfernt von einem Heizdraht 56 angeordnet ist, beispielsweise an einem Geländer 73, und zum Messen einer Umgebungstemperatur ausgebildet ist.

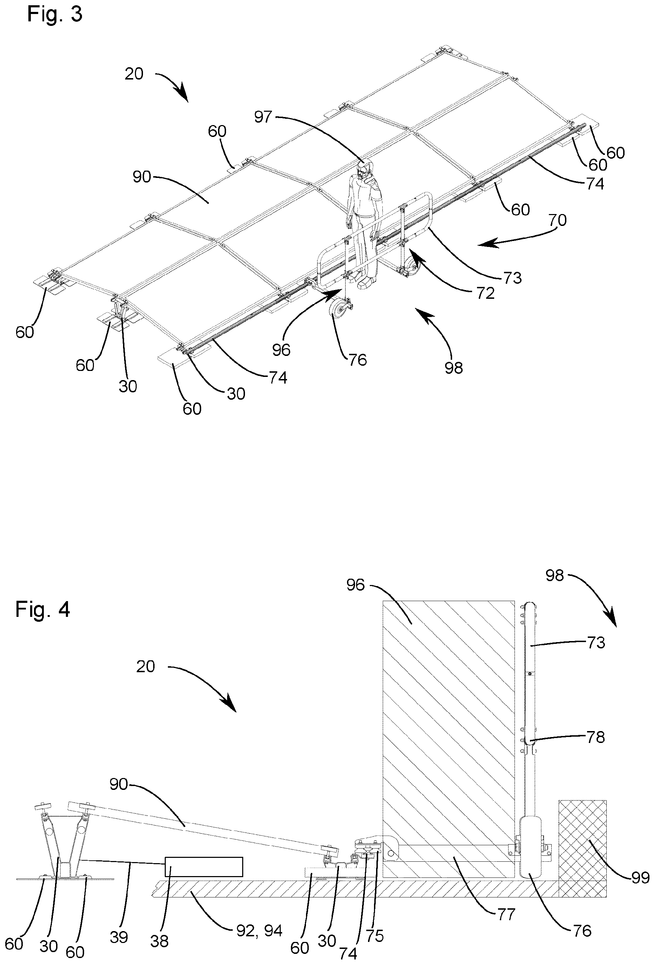

Fig. 3 und Fig. 4 zeigen ein drittes Ausführungsbeispiel eines Dachsystems 20 in einer schematischen, perspektivischen Ansicht bzw. in einer schematischen Seitenansicht.

Das Dachsystem 20 weist zahlreiche Modulstützen 30 auf, wobei die Modulstützen 30 jeweils mittels eines Lastkontrollsensors 60 auf der nicht dargestellten Dachfläche 92 aufgesetzt sind. Durch die Anordnung von Lastkontrollsensoren 60 in allen Befestigungspunkten des Dachsystems 20 an der Dachfläche 92 wird ein Messen der durch das Dachsystem 20 auf die Dachfläche 92 wirkenden Gewichtskraft ermöglicht, einschließlich des Gewichts der Photovoltaikmodule 90 und eventuell weiteren aufliegenden Lasten, wie beispielsweise Schnee.

Ferner weist das Dachsystem 20 eine Absturzsicherung 70 auf, welche einen sicheren Arbeitsbereich 96 für eine Person 97 bereitstellt. Ein Geländer 73 der Absturzsicherung trennt den Arbeitsbereich 96 vom Gefahrenbereich 98. Das Geländer 73 ist Teil eines bewegbaren und fahrbaren Gestells 72, welches entlang einer Führungsschiene 74 zwangsgeführt ist. Durch Laufrollen 76 wird ein Verschieben des Gestells 72 vereinfacht, wobei die Laufrollen 76 mittels Arretiervorrichtungen arretierbar sind.

In größerem Detail ist die Absturzsicherung 70 in Fig. 4 dargestellt. Das Geländer 73 weist ein Klappgelenk 78, mittels dessen das Geländer 73 entlang einer horizontalen Achse klappbar ist, auf. Dies verringert den Schattenwurf auf Photovoltaikmodule 90, welche auf Modulstützen 30 aufgelegt sind. An den Unterseiten der Modulstützen 30 sind Lastkontrollsensoren 60 angeordnet, welche die durch das Dachsystem 20 und die Photovoltaikmodule 90 bewirkte Last messen. Die als Flachdach 94 ausgebildete Dachfläche 92 weist an ihrem seitlichen Rand eine Attika 99 auf.

Das Geländer 73 ist mittels Laufrollen 76 verschiebbar und ist mittels Beabstandungstraversen 77 und damit verbundenen Schienenschlitten 75 an einer Führungsschiene 74 befestigt. Das Gestell 72 ist entlang der Führungsschiene 74 bewegbar. Die Führungsschiene 74 ist an einigen Modulstützen 30 des Dachsystems 20 befestigt.

Schließlich weist das Dachsystem 20 eine Stützhöhensteuereinheit 38 auf, welche mittels eines Ansteuerkabels 39 mit mindestens einer Modulstütze 30 verbunden ist. Die Stützhöhensteuereinheit 38 ist eingerichtet und ausgebildet, mittels eines Aktuators die Höhe der Modulstütze 30 einzustellen. Beispielsweise erhält hierzu die Stützhöhensteuereinheit 38 eine Aufforderung von einer Lastkontrolleinheit 62.

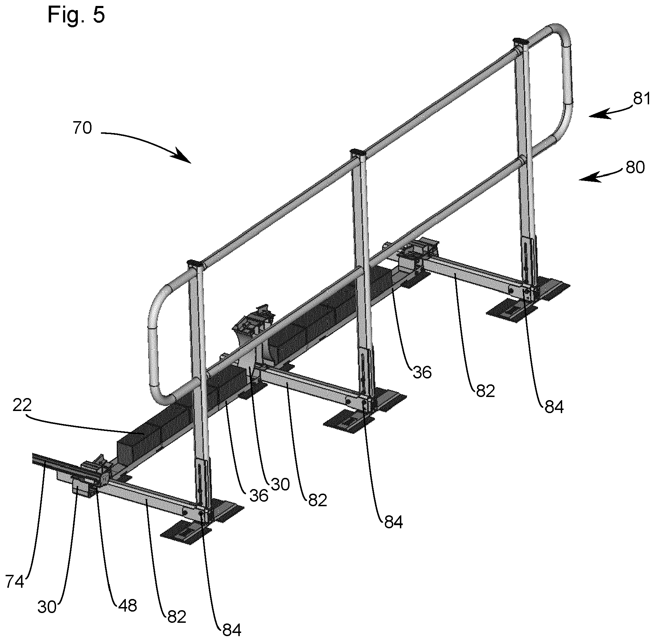

Fig. 5 zeigt einen Abschnitt einer schematischen perspektivischen Darstellung eines dritten Ausführungsbeispiels eines Dachsystems 20. Das Dachsystem weist Modulstützen 30 auf, welche mittels zweier Bodenschienen 36 miteinander verbunden sind. Auf den Bodenschienen 36 sind Ballastgewichte 22 angeordnet. Am oberen Ende der Modulstützen 30 sind Auflageflächen zum Auflegen von Photovoltaikmodulen 90 vorgesehen.

Das Dachsystem 20 gemäß Fig. 5 weist eine Absturzsicherung 70 auf, welche einen als Geländer ausgebildeten Funktionsabschnitt 81 sowie einen Sockelabschnitt 80 aufweist. Der Sockelabschnitt 80 ist mittels Befestigungsvorrichtungen 84 mit Kopplungstraversen 82 verbunden. Die Kopplungstraversen 82 dienen der Beabstandung und der Kopplung von den Modulstützen 30 und sind in Einschuböffnungen 48 der Modulstützen 30 in die Modulstützen 30 eingeschoben. Auf diese Weise erfolgt eine stabile Verbindung zwischen Modulstützen 30 und Absturzsicherung 70. Die Befestigungsvorrichtungen 84 sind hier als Klappvorrichtungen ausgebildet, sodass der Sockelabschnitt 80 gemeinsam mit dem Funktionsabschnitt 81 einklappbar ist.

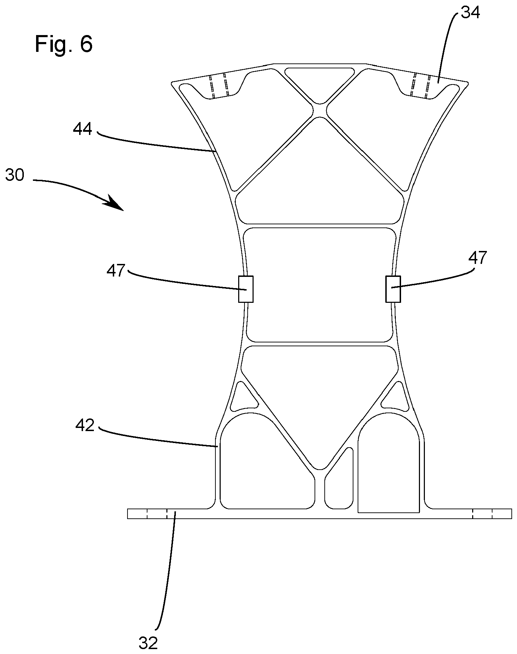

In Fig. 6 ist eine schematische Seitenansicht eines Ausführungsbeispiels einer Modulstütze 30 abgebildet, wobei die Modulstütze 30 mehrstückig ausgebildet ist. Die Modulstütze 30 weist einen Modulstützfuß 42 mit einer Unterseite 32 der Modulstütze 30 zur Anordnung auf einer Dachfläche 92 auf. Weiterhin weist die Modulstütze 30 einen Modulstützkopf 44 mit einer Oberseite 34 der Modulstütze 30 zum Auflegen von mindestens einem Photovoltaikmodul 90 auf.

Der Modulstützfuß 42 und der Modulstützkopf 44 sind mittels einer Modulstützenverbindungsvorrichtung 47 verbunden, wobei die Modulstützenverbindungsvorrichtung 47 beispielsweise mittels eines Klickverschlusses wirkt. Es ist vorgesehen, dass ein Modulstützfuß 42 mit verschiedenen Modulstützenköpfen 44 unterschiedlicher Höhe kombinierbar ist. Folglich ist die Modulstütze 30 in ihrer Höhe einstellbar.

In einer anderen, nicht dargestellten Ausführungsform sind ein Modulstützfuß 42 und ein Modulstützkopf 44 mittels einer Rastvorrichtung verbunden. Je nach Positionierung der Rastvorrichtung weist die Modulstütze 30 eine unterschiedliche Höhe auf. Beispielsweise ist eine Rastvorrichtung mittels mindestens eines Druckknopfs mit einer Feder sowie zwei ineinanderverlaufenden Rohren unterschiedlichen Durchmessers realisiert.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 20: Dachsystem
- 22: Ballastgewicht
- 25: Photovoltaiksystem
- 30: Modulstütze
- 32: Unterseite
- 34: Oberseite
- 35: Auflagefläche
- 36: Bodenschiene
- 38: Stützhöhensteuereinheit
- 39: Ansteuerkabel
- 42: Modulstützfuß
- 44: Modulstützkopf
- 46: Rastvorrichtung
- 47: Modulstützenverbindungsvorrichtung
- 48: Einschuböffnung
- 50: Heizvorrichtung
- 52: Temperatursensor
- 54: Heizsteuereinheit
- 56: Heizdraht
- 60: Lastkontrollsensor
- 62: Lastkontrolleinheit
- 70: Absturzsicherung
- 72: Gestell
- 73: Geländer
- 74: Führungsschiene
- 75: Schienenschlitten
- 76: Laufrolle
- 77: Beabstandungstraverse
- 78: Klappgelenk
- 80: Sockelabschnitt
- 81: Funktionsabschnitt
- 82: Kopplungstraverse
- 84: Befestigungsvorrichtung
- 86: Individualabsturzauffangeinrichtung
- 87: Seilsicherungssystem
- 88: Feder
- 90: Photovoltaikmodul
- 92: Dachfläche
- 94: Flachdach
- 96: Arbeitsbereich
- 97: Person
- 98: Gefahrenbereich
- 99: Attika

## Patentansprüche

1. Dachsystem (20) für mindestens ein Photovoltaikmodul (90), wobei das Dachsystem (20) auf einer Dachfläche (92), insbesondere auf einem Flachdach (94), anordenbar oder angeordnet ist,
wobei das Dachsystem (20) mehrere Modulstützen (30) zum Stützen mindestens eines Photovoltaikmoduls (90) aufweist, wobei die Modulstützen (30) jeweils mit einer Unterseite (32) auf der Dachfläche (92) anordenbar oder angeordnet sind und die Modulstützen (30) jeweils an einer Oberseite (34) eine Auflagefläche (35) zum Auflegen eines Photovoltaikmoduls (90) aufweisen,
**dadurch gekennzeichnet,**
**dass** das Dachsystem (20) eine, insbesondere elektrisch betriebene, Heizvorrichtung (50) zum Beheizen des Dachsystems (20) aufweist, wobei insbesondere die Heizvorrichtung (50) zum Beheizen mindestens einer Modulstütze (30) und/oder mindestens eines Photovoltaikmoduls (90) vorgesehen ist und/oder mit mindestens einer Modulstütze (30) thermisch gekoppelt ist, und/oder
**dass** die Modulstützen (30) in einer Höhe zwischen der jeweiligen Unterseite (32) und jeweiligen Oberseite (34) zum Einstellen eines Neigungswinkels eines Photovoltaikmoduls (90) einstellbar sind und/oder
**dass** das Dachsystem (20) mindestens einen als Kraftsensor ausgebildeten Lastkontrollsensor (60) zum Bereitstellen von Lastdaten aufweist, wobei der mindestens eine Lastkontrollsensor (60) ausgebildet und eingerichtet ist, eine auf das Dachsystem (20) und/oder mindestens ein Photovoltaikmodul (90) wirkende Gewichtskraft als Lastdaten zu messen, wobei insbesondere der mindestens eine Lastkontrollsensor (60) an einer der Dachfläche (92) zugewandten Unterseite des Dachsystems (20) angeordnet ist.

2. Dachsystem (20) nach Anspruch 1, **dadurch gekennzeichnet, dass** das Dachsystem (20) mehrere Bodenschienen (36) zum Verbinden und Beabstanden von jeweils mindestens zwei Modulstützen (30) aufweist, wobei die Bodenschienen (36) jeweils eine der Dachfläche (92) zugewandte Bodenschienenunterseite aufweisen,
wobei insbesondere die Heizvorrichtung (50) an und/oder in mindestens einer Bodenschiene (36) und/oder mindestens einer Modulstütze (30) angeordnet ist und/oder
wobei insbesondere mindestens ein Lastkontrollsensor (60) an einer Bodenschienenunterseite und/oder an einer Unterseite (32) mindestens einer Modulstütze (30) angeordnet ist.

3. Dachsystem (20) nach Anspruch 1 oder 2, **dadurch gekennzeichnet, dass** die Heizvorrichtung (50) einen Temperatursensor (52) und eine Heizsteuereinheit (54) zum Steuern oder Regeln der Heizvorrichtung (50) aufweist, wobei die Heizsteuereinheit (54) ausgebildet und eingerichtet ist, vom Temperatursensor (52) gemessene Temperaturdaten zu verarbeiten und in Abhängigkeit der Temperaturdaten die Heizvorrichtung (50) anzusteuern.

4. Dachsystem (20) nach einem der Ansprüche 1 bis 3, **dadurch gekennzeichnet, dass** die Heizvorrichtung (50) mindestens einen Heizdraht (56) aufweist, wobei der mindestens eine Heizdraht (56) in mindestens eine Modulstütze (30) eingefügt ist.

5. Dachsystem (20) nach einem der Ansprüche 1 bis 4, **dadurch gekennzeichnet, dass** die Modulstützen (30) in der Höhe mechanisch und/oder mittels einer elektrischen Stützhöhensteuereinheit (38) einstellbar sind,
wobei insbesondere die Modulstützen (30) jeweils einen Modulstützfuß (42) und einen Modulstützkopf (44) aufweisen, wobei jeweils der Modulstützfuß (42) auswechselbar und/oder mittels einer Rastvorrichtung (46) höhenverstellbar mit dem jeweiligen Modulstützkopf (44) verbunden oder verbindbar ist.

6. Dachsystem (20) nach einem der Ansprüche 1 bis 5, **dadurch gekennzeichnet, dass** das Dachsystem (20) eine Lastkontrolleinheit (62) zum Verarbeiten der Lastdaten aufweist, wobei der mindestens eine Lastkontrollsensor (60) eingerichtet und ausgebildet ist, die gemessenen Lastdaten der Lastkontrolleinheit (62) zur Verfügung zu stellen, wobei die Lastkontrolleinheit (62) ausgebildet und eingerichtet ist, in Abhängigkeit der Lastdaten eine auf das Dachsystem (20) und/oder mindestens ein Photovoltaikmodul (90) wirkende Gewichtskraft als Last zu bestimmen,
wobei insbesondere die Lastkontrolleinheit (62) ausgebildet und eingerichtet ist, eine Zusatzlast im Vergleich mit einer Referenzlast, insbesondere zur Bestimmung von Niederschlag, zu bestimmen.

7. Dachsystem (20) nach Anspruch 6, **dadurch gekennzeichnet, dass** die Lastkontrolleinheit (62) ausgebildet und eingerichtet ist, in Abhängigkeit der Last die Heizvorrichtung (50) anzusteuern, insbesondere bei Überschreiten einer vorbestimmten Zusatzlast die Heizvorrichtung (50) zu aktivieren, und/oder in Abhängigkeit der Last eine Stützhöhensteuereinheit (38) anzusteuern.

8. Dachsystem (20) nach einem der Ansprüche 1 bis 7, **dadurch gekennzeichnet, dass** das Dachsystem (20) eine Absturzsicherung (70) zum Absichern eines Arbeitsbereichs (96), insbesondere auf einer Dachfläche (92), aufweist, wobei insbesondere die Absturzsicherung (70)
(a) ein bewegbares, insbesondere fahrbares, Gestell (72) mit einem Geländer (73) zum Abgrenzen des Arbeitsbereichs (96) von einem Gefahrenbereich (98) aufweist, wobei die Absturzsicherung (70) eine Führungsschiene (74) zum Führen des Gestells (72) aufweist, wobei das Gestell (72) mit der Führungsschiene (74) wirkverbunden ist und das Gestell (72) mittels der Führungsschiene (74) zwangsgeführt ist, wobei das Gestell (72) im Wesentlichen in eine horizontale Bewegungsrichtung bewegbar ist, und/oder
(b) einen der Dachfläche (92) zugewandten Sockelabschnitt (80) aufweist, wobei insbesondere die Absturzsicherung (70) einen der Dachfläche (92) abgewandten Funktionsabschnitt (81) aufweist, wobei das Dachsystem (20) mindestens eine, insbesondere stabförmige, Kopplungstraverse (82) zum Koppeln der Absturzsicherung (70) mit einer Modulstütze (30) aufweist, wobei die mindestens eine Kopplungstraverse (82) in einem ersten Abschnitt mit einer Modulstütze (30) verbindbar oder verbunden ist und wobei die mindestens eine Kopplungstraverse (82) in einem zweiten Abschnitt mit dem Sockelabschnitt (80) der Absturzsicherung (70) verbindbar oder verbunden ist, und/oder
(c) eine Individualabsturzauffangeinrichtung (86), insbesondere ein Seilsicherungssystem (87) oder Schienensicherungssystem, zur Absturzsicherung in Zusammenwirken mit persönlicher Schutzausrüstung aufweist, wobei die Individualabsturzauffangeinrichtung (86) mit mindestens einer Modulstütze (30) verbunden ist, wobei die mindestens eine Modulstütze (30) ausgebildet und eingerichtet ist, mindestens ein aufliegendes Photovoltaikmodul (90) als Gegengewicht mit der Individualabsturzauffangeinrichtung (86) zu verknüpfen.

9. Dachsystem (20) nach Anspruch 8, **dadurch gekennzeichnet, dass** die Führungsschiene (74) eine Längserstreckung aufweist, wobei die Längserstreckung im Wesentlichen horizontal ausgerichtet ist, wobei insbesondere die Führungsschiene (74) eine lineare Führungsschiene (74) ist, und/oder
das Gestell (72) mindestens eine Laufrolle (76) zum Verfahren des Gestells (72) aufweist, wobei insbesondere das Gestell (72) mindestens zwei Laufrollen (76) aufweist und die mindestens zwei Laufrollen (76) einen gleichen Abstand von der Führungsschiene (74) aufweisen und in der Bewegungsrichtung des Gestells (72) voneinander beanstandet sind.

10. Dachsystem (20) nach Anspruch 8 oder 9, **dadurch gekennzeichnet, dass** die Absturzsicherung (70) mindestens eine Befestigungsvorrichtung (84), insbesondere einen Klappmechanismus, zur Befestigung einer Kopplungstraverse (82) an der Absturzsicherung (70) aufweist, wobei insbesondere die Befestigungsvorrichtung (84) im Sockelabschnitt (80) der Absturzsicherung (70) angeordnet ist und/oder wobei insbesondere die Kopplungstraverse (82) in dem zweiten Abschnitt mittels der Befestigungsvorrichtung (84) mit dem Sockelabschnitt (80) der Absturzsicherung (70) verbindbar oder verbunden ist, und/oder die Modulstützen (30) jeweils mindestens eine Einschuböffnung (48) zum Einschieben einer Kopplungstraverse (82) aufweisen.

11. Dachsystem (20) nach einem der Ansprüche 8 bis 10, **dadurch gekennzeichnet, dass** die Absturzsicherung (70), zumindest teilweise, mittels einer Fernbedienung elektrisch und/oder mechanisch bewegbar und/oder klappbar ist.

12. Verwendung eines Dachsystems (20) nach einem der Ansprüche 1 bis 11 zur Anordnung von mindestens einem Photovoltaikmodul (90), insbesondere und mindestens einer Absturzsicherung (70), auf einer Dachfläche (92), insbesondere einem Flachdach (94).

13. Photovoltaiksystem (25) mit einem Dachsystem (20) nach einem der Ansprüche 1 bis 11 und mindestens einem Photovoltaikmodul (90) zum Anordnen des Photovoltaikmoduls (90) auf einer Dachfläche (92), insbesondere einem Flachdach (94).
